# EUROPEAN PATENT SPECIFICATION

(11) **EP 4 049 459 B1**
(45) Date of publication and mention of the grant of the patent: **26.02.2025**
(21) Application number: 20793804.4
(22) Date of filing: 29.09.2020
(51) Int. Cl.: H04Q 9/00, B65D 79/02

(54) **A METHOD AND AN APPARATUS FOR PROVIDING SMART SUGGESTIONS**
VERFAHREN UND GERÄT ZUR BEREITSTELLUNG INTELLIGENTER VORSCHLÄGE
PROCÉDÉ ET APPAREIL POUR FOURNIR DES SUGGESTIONS INTELLIGENTES

(30) Priority: 21.10.2019 IN 201911042623
(43) Date of publication of application: 31.08.2022
(73) Proprietor: Carrier Corporation, Palm Beach Gardens, FL 33418 (US)
(72) Inventor: MADAMSHETTY, Praneeth, Hyderabad, Telangana 500081 (IN)
(74) Representative: Dehns
(86) International application number: PCT/IB2020/059079
(87) International publication number: WO 2021/079213

(56) References cited:
- WO-A2-02/26566
- US-A1- 2006 071 786
- US-A1- 2019 158 618
- US-B1- 8 989 053

## Description

The present invention generally relates to smart container systems. More particularly, the invention relates to an apparatus and a method for providing smart suggestion by the containers.

In general, one or more items are packed in a container and the container along with the items are transported from a manufacturer's place to another place by ships, aeroplane, vehicles, trains or through any other such means. Further, the items packed in the container may include content which can be consumed/used by an end consumer. Furthermore, some manufacturers of the content may define certain environment conditions (like temperature, humidity or air pressure) for keeping the item so that the contents of the item remain fresh or to prevent the contents from becoming stale/unusable. Thereby, the items are packed in a refrigerated container to maintain an environment that is suitable for the contents of the item.

However, there may come a situation when the container becomes faulty and may be unfit to carry the items. Due to the defects, the container may not be able to provide an environment to the items that is required for keeping the contents fresh. Due to the change in the environment, the chemical composition of the item's contents can get modified making the contents of the item non-consumable/unusable for the end consumers. At present, a defect in a container is only detected when a technician manually checks functioning of the container which is a time-consuming task. And, when the technician finds the defect in the container, a staff personnel needs to manually find a new container for moving the items from a defective container to the new container.

In view of the afore-mentioned problems in the existing solutions, there is a need of an efficient and effective system and a method for automatically determining a defect in a container. There is also a need to automatically determine a new container for moving item/s from a defective container to the new container. There is also a requirement for preventing contents in an item from becoming stale/unusable. In order to solve the problems in the existing solutions, a system and a method are disclosed.

A first aspect of the present invention describes a method for notifying a person to shift item/s from a defective/faulty container to a new container. The method comprises steps of determining a defect associated with a first container. The first container comprises one or more items. The first container establishes a communication with each of one or more second containers. The method further comprises steps of transmitting a request to each of the one or more second containers and receiving information from each of the one or more second containers in response to the request. The method further comprises steps of determining one or more healthy containers from the one or more second containers based on the information received from each of the one or more second containers and transmitting a message to a user equipment for shifting the one or more items from the first container to the one or more healthy containers. The first container is a refrigerated container. The one or more second containers are refrigerated containers.

Optionally, the defect associated with the first container is determined using one or more sensors associated with the first container.

Optionally, the defect associated with the first container comprises a refrigeration defect, an over-weight defect, a sensor defect or a door defect.

Optionally, the communication between the first container and the one or more second containers corresponds to a cellular communication or a shortrange communication.

Optionally, the information received from each of the one or more second containers comprises a payload information, a temperature information, a shipping destination information, a weight information, and/or a capacity information. In yet another embodiment of the invention, the one or more healthy containers are determined by prioritizing the one or more second containers based on the information from each of the one or more second containers.

Optionally, the one or more healthy containers are determined by comparing a shipping destination information of each of the one or more second containers with a shipping destination information of the first container.

Optionally, the one or more healthy containers and the first container have same shipping destination information. Also, the one or more healthy containers have capacity to accommodate the one or more items from the first container.

Optionally, the first container transmits information related to the defect to a server, wherein the server transmits the request to each of the one or more second containers and receives information from each of the one or more second containers in response to the request.

Optionally, the one or more healthy containers are determined by a server based on the information received from each of the one or more second containers.

Optionally, the message is transmitted from the server to the user equipment for notifying a staff personnel about the defect associated with the first container and/or for shifting the one or more items from the first container to the one or more healthy containers.

A second aspect of the present invention describes a first container for notifying a person to shift item/s from a defective/faulty container to a new container. The first container comprises one or more sensors adapted to determine a defect associated with the first container and a communication unit adapted to establish a communication with each of one or more second containers. The first container comprises one or more items. The first container also comprises a transmitter adapted to transmit a request to each of the one or more second containers and a receiver adapted to receive information from each of the one or more second containers in response to the request. The first container further comprises a processor adapted to determine one or more healthy containers from the one or more second containers based on the information received from each of the one or more second containers and the transmitter adapted to transmit a message to a user equipment for shifting the one or more items from the first container to the one or more healthy containers. The first container is a refrigerated container. The one or more second containers are refrigerated containers.

Optionally, the defect associated with the first container comprises a refrigeration defect, an over-weight defect, a sensor defect or a door defect.

Optionally, the communication between the first container and the one or more second containers corresponds to a cellular communication or a short-range communication.

Optionally, the one or more healthy containers are determined by prioritizing the one or more second containers based on the information from each of the one or more second containers.

Optionally, the one or more healthy containers and the first container have same shipping destination information. Moreover, the one or more healthy containers have capacity to accommodate the one or more items from the first container.

Optionally, the message is transmitted to the user equipment for notifying a staff personnel about the defect associated with the first container and/or for shifting the one or more items from the first container to the one or more healthy containers.

According to a third aspect of the present invention, a computer readable medium is disclosed for notifying a person to shift item/s from a defective/faulty container to a new container. The computer readable medium comprises one or more processors and a memory coupled to the one or more processors, the memory storing instructions executed by the one or more processors. The memory stores instructions executed by the one or more processors that are configured to determine a defect associated with a 5 first container, the first container comprises one or more items and establish a communication with each of one or more second containers. The memory stores instructions executed by the one or more processors that are further configured to transmit a request to each of the one or more second containers and to receive information from each of the one or more second containers in response to the request. The memory stores instructions executed by the one or more processors that are also configured to determine one or more healthy containers from the one or more second containers based on the information received from each of the one or more second containers and transmit a message to a user equipment for shifting the one or more items from the first container to the one or more healthy containers. The first container is a refrigerated container. The one or more second containers are refrigerated containers.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Other aspects, advantages, and salient features of the invention will become apparent to those skilled in the art from the following detailed description, which taken in conjunction with the annexed drawings, discloses exemplary embodiments of the invention.
Figure 1A depicts an exemplary system architecture according to an exemplary embodiment of the invention.
Figure 1B depicts an exemplary system architecture according to an exemplary alternative embodiment of the invention.
Figure 1C depicts an exemplary communication between a container and a user equipment according to an exemplary embodiment of the invention.
Figure 2 depicts block diagram of different components of a container according to an exemplary embodiment of the invention.
Figure 3 depicts an exemplary flowchart illustrating a method to perform the invention according to an exemplary embodiment of the invention.

Corresponding reference numerals indicate corresponding parts throughout the drawings.

Described herein is the technology with an apparatus and a method for notifying a person to shift item/s from a defective/faulty container to a new container. Each container may have one or more sensors to determine a defect associated with each of the container. When a first container determines a defect associated with the first container, the first container may establish a communication with one or more second containers. Also, the first container may have one or more items inside the first container. After the first container establishes the communication with each of the one or more second containers, the first container may transmit a request to each of the one or more second containers for providing information. The one or more second containers may provide information to the first container in response to the request received by the one or more second containers. When the first container receives the information from the one or more second containers, the first container determines one or more healthy containers from the one or more second containers based on the information. And then, the first container may transmit a message to a user equipment for shifting the one or more items from the first container to the one or more healthy containers.

As used herein, each of the container may be used for storing, holding or keeping one or more items. The container may communicate with other containers, the item/s and/or a server through a network. An electronic circuit may be coupled with each of the containers, the electronic circuit may comprise, but is not limited to, a transmitter, a receiver, a communication unit, one or more sensor/s, a processor, and/or a memory. The electronic circuit of each of the containers may perform operations and functions as described further in the specification.

As used herein, the item/s includes content for consumption or usage by an end customer. An electronic device may also be coupled with the item/s. The electronic device of the item/s may comprise, but is not limited to, a transmitter, a receiver, a communication unit, one or more sensor/s, a processor, and/or a memory. The electronic device of the item may perform same operation/s and function/s as of the electronic circuit coupled with each of the container. Such item/s may be a bottle or a box having liquid content, solid content or semi solid content or any such item known in the art. The content in the item/s may be for any kind of consumption/usage and may be a pharmaceutical content, a liquid content, an eatable content, a lotion, a cream, tablets or any such content known in the art.

As used herein, the server has processing capabilities as disclosed further in the specification. The server may be a cloud storage, a remote database, or any such storage known in the art.

As used herein, the one or more sensor/s may possess capability of determining defect/s associated with the container. The one or more sensors may determine a refrigeration defect, an over-weight defect, a sensor defect or a door defect associated with the container. The refrigeration defect may be a defect related to cooling or refrigeration inside the container. The over-weight defect may be a defect related to weight of the items inside the container. Specifically, the over-weight defect means when the container contains more number of items than a specified threshold or weight of the items inside the container crosses a specified threshold as defined by a manufacturer of the container or a shipment agency. The sensor defect may be related to functioning or working of one or more sensors placed or located inside the container. The door defect may be a defect when the door of the container does not gets closed properly due to which the cooling inside the container is not effective enough for the items present inside the container. Further, the one or more sensor/s may possess capability of determining any such defect/s associated with the container that is obvious to a person skilled in the art.

As used herein, the communication may refer to any communication established through a mesh network, any cellular network (e.g. Global System for Mobile (GSM) network, a Long-Term Evolution (LTE) network, a code-division multiple access (CDMA) network, a narrow-band internet of thing (NB-IoT) technique or category M1 technique), any short-range network (e.g. a bluetooth network, a WiFi network, a ZigBee network) or any such network/technique that is known in the art.

Throughout the specification, reference numeral 102 depicts a single container. The reference numerals 102A, 102B, 102C, 102D may be considered as one or more containers. Likewise, throughout the specification, reference numeral 104 depicts a single electronic circuit coupled with a single container 102. The reference numerals 104A, 104B, 104C, 104D may be considered as one or more electronic circuits coupled to the one or more containers. Also, throughout the specification, reference numeral 106 depicts a single item placed inside a single container 102. The reference numerals 106A, 106B, 106C... 106L may be considered as one or more items placed inside one or more containers.

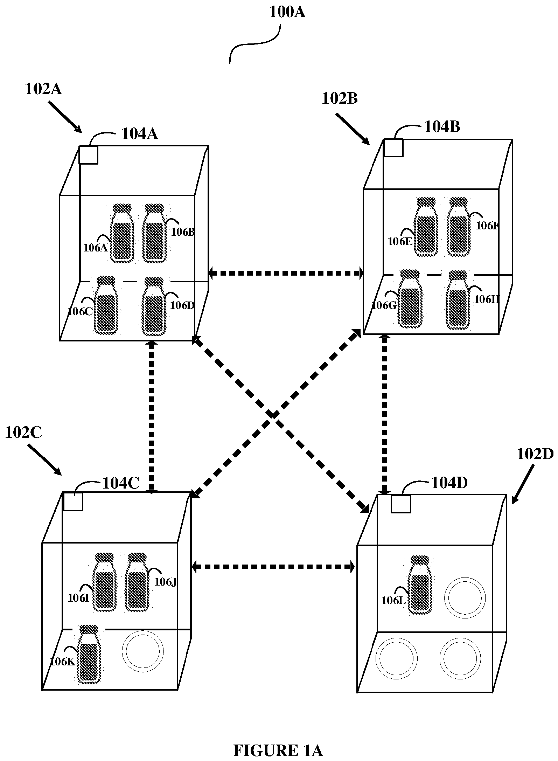

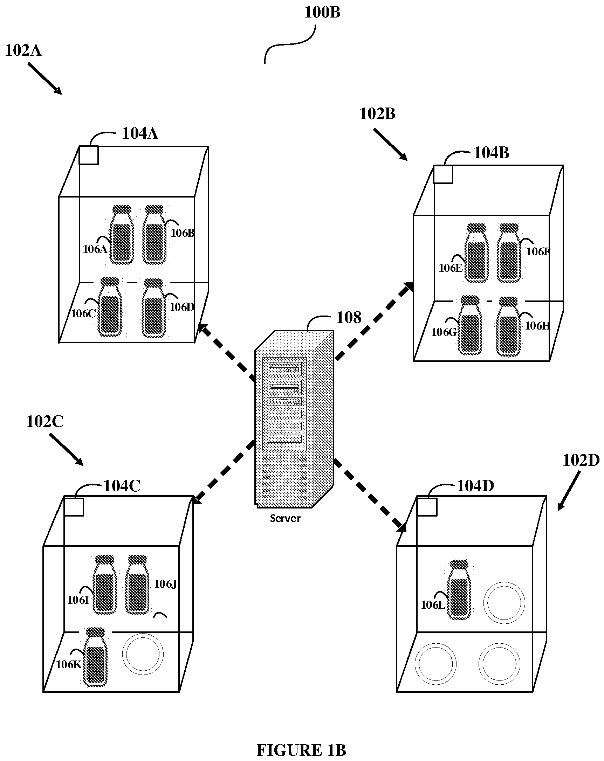

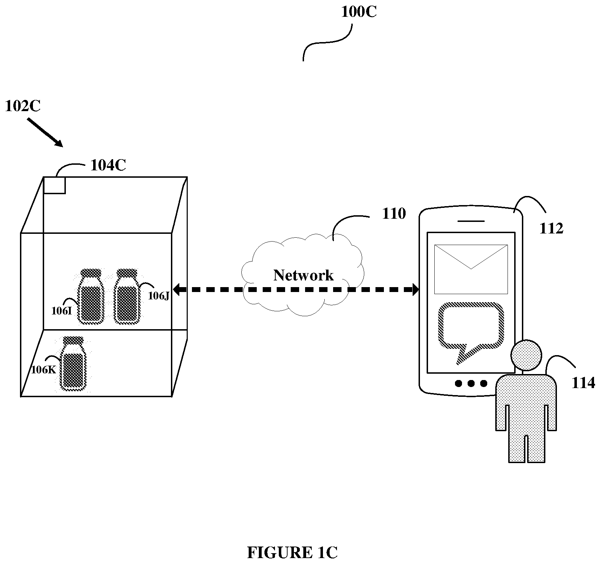

Figure 1 depicts a system architecture 100 for notifying a person to shift item/s from a defective/faulty container to a new container, according to an exemplary embodiment of the invention. As depicted in Figure 1, a container 102 may comprises an electronic circuit 104 coupled with the container 102 and one or more items 106 placed inside the container 102. The container 102 may determine defect/s associated with the container 102. Such defect/s may be determined using one or more sensors associated with the container 102. In an exemplary embodiment, the container 102 may inspect for defect periodically. For an instance, the container 102 may inspect for any defect in every 30 minutes. In an exemplary alternative embodiment, the container 102 may inspect for any defect based on an occurrence of an event. For an instance, the container 102 may inspect the defect when any gesture is made on the container 102 by a user or when the container 102 detects any motion through an accelerometer gesture. The defect/s may be a refrigeration defect, an over-weight defect, a sensor defect or a door defect associated with the container 102.

The refrigeration defect may be a defect related to an effect of cooling or refrigeration inside the container 102. In an exemplary first embodiment, the container 102 may be required to maintain temperature within a limit of 12° Celsius to 22° Celsius. A temperature sensor of the container 102 may detect current temperature inside the container 102 is around 27° Celsius. The temperature sensor may communicate the current temperature to a processor of the container 102. Then, the processor may determine that the current temperature inside the container 102 is not falling within the specified limit of 12° Celsius to 22° Celsius. In such a situation, the processor of the container 102 determines that the container 102 may be having a defect. In an exemplary second embodiment, a processor using a gas sensor may be associated with the container 102 may detect if the gas (such as ammonia gas or liquid nitrogen gas) used for cooling inside the container 102 has been exhausted or drained. In an exemplary third embodiment, a processor using a sensor may be used to determine if a compressor or throttling device associated with the container 102 is working properly and cooling inside the container 102.

The over-weight defect associated with the container 102 may be a defect related to a total weight of the container 102. Specifically, the over-weight defect relates to the container 102 containing more number of items than a specified limit. Or, a defect may be determined when the total weight of the items present inside the container 102 crosses a specified threshold as defined by a manufacturer of the container or a shipment agency. For an instance, the container 102 may be designed to carry 12 items at a time or carry a weight of 30 kilograms at a time. When the container 102 carries more than 12 items or more than 30 kilograms at a time, then a weight sensor may determine such defect of the container 102.

The sensor defect may be related to functioning or working of one or more sensors placed or located inside the container 102. The container 102 may detect if the one or more sensors are functioning or working properly. The one or more sensors may be a temperature sensor, a compressor suction and discharge sensor, a supply air temperature sensor, a return air temperature sensor, a location sensor, an accelerometer sensor, a supply recorder sensor, an ambient sensor or any such sensor which may be required for the functioning of the container 102.

The door defect may be a defect if a door of the container 102 does not gets closed properly due to which the cooling inside the container 102 is not effective enough for the items 106 present inside the container 102. For an instance, a sensor associated with the container 102 may determine that a door of the container 102 is not latched properly or not functioning properly. Although a limited number of exemplary defects (determined by a container) have been explained herein; however, any number or kind/types of defects can be determined by a container as understood by a person skilled in the art. Thereby, the present invention offers a technical advantage by providing an automated way to determine defect/s associated with the container 102.

Considering an exemplary scenario when a first container 102C determines a defect associated with the first container 102C, the first container 102C may establish a communication with one or more second containers 102A/102B/102D. In an exemplary embodiment, the first container 102C may establish a cellular communication (through a cellular network) with the one or more second containers 102A/102B/102D. In an exemplary alternative embodiment, the first container 102C may establish a short-range communication (through a short-range network) with the one or more second containers 102A/102B/102D. In an exemplary different embodiment, the first container 102C may establish a communication with the one or more second containers 102A/102B/102D through a server 108 as depicted in Figure 1B. In an exemplary different embodiment and as depicted in Figure 1B, the first container 102C may transmit information related to the defect to a server 108. On receiving the information related to the defect from the first container 102C, the server 108 may establish a communication with the one or more second containers 102A/102B/102D on behalf of the first container 102C.

Once the communication with the one or more second containers 102A/102B/102D is established, the first container 102C may transmit a request to each of the one or more second containers 102A/102B/102D. In response to the request, the one or more second containers 102A/102B/102D may provide information associated with the one or more second containers 102A/102B/102D. In an exemplary different embodiment and as depicted in Figure 1B, the server 108 may transmit a request to each of the one or more second containers 102A/102B/102D through a network, wherein the request is transmitted for providing an information associated with one or more second containers 102A/102B/102D. Further, each of the container 102 may determine such information either periodically or based on the request from first container 102C or the server 108 and maintain this kind of information. As used herein, the information associated with the container 102 may comprise, but is not limited to, a payload information, a temperature information, a shipping destination information, a weight information, and/or a capacity information. An exemplary Table 1 has been provided herein below to explain the information associated with each of the containers 102.

As depicted in exemplary Figure 1A, exemplary Figure 1B and an exemplary Table 1 below, four items (namely, item 106A, item 106B, item 106C and item 106D) are placed inside container 102A. Similarly, four items (namely, item 106E, item 106F, item 106G and item 106H) are placed inside container 102B. Likewise, three items (namely, item 106I, item 106J and item 106K) are placed inside container 102C. Also, only one items (namely, item 106L) is placed inside container 102D. Therefore, payload information associated with a container 102 may correspond to a total number of items 106 currently placed inside the container 102. Also, capacity information associated with the container 102 may correspond to a volume of the container 102 for accommodating a maximum number of items 106 (at a time) inside the container 102. As provided in the exemplary Table 1 below, each of the containers may accommodate a total number of 4 items at a time inside the container.

**Table 1**

| **Container** | **Container 102A** | **Container 102B** | **Container 102C** | **Container 102D** |
|---|---|---|---|---|
| **Information** | | | | |
| Defect | No Defect | No Defect | One Defect | No Defect |
| Payload Information | 4 Items | 4 Items | 3 Items | 1 Items |
| Capacity Information | 4 Items | 4 Items | 4 Items | 4 Items |
| Weight Information (Current) | 10 kilograms | 10 kilograms | 7.5 kilograms | 2.5 kilograms |
| Weight Limit Information (Maximum) | 10 kilograms | 10 kilograms | 10 kilograms | 10 kilograms |
| Temperature Information (Current) | 15° Celsius | 20° Celsius | 29° Celsius | 14° Celsius |
| Temperature Information (Threshold Range) | 13° Celsius - 18° Celsius | 14° Celsius - 22° Celsius | 13° Celsius - 17° Celsius | 11° Celsius - 18° Celsius |
| Shipping Departure Information | California, United States | California, United States | California, United States | California, United States |
| Shipping Destination Information | Texas, United States | Washington DC, United States | Texas, United States | Texas, United States |

The weight information associated with the container 102 may correspond to a current weight of the container 102 as well current weight of each item 106 placed inside the container 102. For an instance, current weight of the container 102A and the container 102B is 10 kilograms as each of these containers have 4 items inside it. Also, the current weight of the container 102C (carrying 3 items) and the container 102D (carrying 1 item) is 7.5 kilograms and 2.5 kilograms, respectively. The weight limit information associated with the container 102 may correspond to a maximum weight limit of the items or container that is allowed for a container 102 to carry items. As per Table 1, each of the containers 102 have same weight limit of 10 kilograms. The temperature information (current) associated with a container 102 may correspond to a current temperature being maintained inside the container 102. For an example, the current temperature in the container 102A, the container 102B, the container 102C, and the container 102D is 15°C, 20°C, 29°C and 14°C, respectively. The temperature information (threshold range) associated with a container 102 may correspond to a temperature range that should ideally be maintained inside the container 102. As shown in Table 1, the threshold range of temperature for the container 102A, the container 102B, the container 102C and the container 102D is (13°C-18°C), (14°C-22°C), (13°C-17°C), and (11°C-18°C), respectively.

The shipping departure information associated with a container 102 may correspond to an address/location in a city of a country from where the container 102 carrying items will depart/leave. Likewise, the shipping destination information associated with a container 102 may correspond to an address/location in a city of a country to which the container 102 carrying items will reach or deliver items. For an instance, the each of the container 102 may depart from California, United States. Also, the container 102A may deliver items to Texas (United States), the container 102B may deliver items to the Washington DC (US) and the container 102C and container 102D may deliver items to same location i.e. Texas (US).

Now, the first container 102C or the server may determine one or more healthy containers from the one or more second containers 102A/102B/102D for shifting three items (namely, item 106I, item 106J and item 106K) from the first container 102C to the one or more healthy containers. On receiving the request from the first container 102C as depicted in Figure 1A, each of the one or more second containers 102A/102B/102D may determine the information and may transmit the information to the first container 102C using the communication. Then, the first container 102C may determine one or more healthy containers from the one or more second containers 102A/102B/102D based on the information received from each of the one or more second containers 102A/102B/102D. In an exemplary different embodiment and as depicted in Figure 1B, on receiving the request from the server 108, each of the one or more second containers 102A/102B/102D may determine the information and may transmit the information to the server 108 through the network. The server 108 may determine one or more healthy containers from the one or more second containers 102A/102B/102D based on the information received from each of the one or more second containers 102A/102B/102D.

Considering exemplary Table 1 provided above, the first container 102C or the server 108 may receive the information associated with the one or more second containers 102A/102B/102D from the one or more second containers 102A/102B/102D as per Table 1. Then, the first container 102C or the server 108 may determine information associated with the first container 102C (i.e. payload information as 3 items, weight information (current) as 7.5 kilograms), temperature information (threshold range) as (13°C-17°C), shipping destination information as California (US) and shipping departure information as Texas (US). Now, the first container 102C or the server 108 may prioritize the one or more second containers 102A/102B/102D based on the information associated with the one or more second containers 102A/102B/102D and the information associated with the first container 102C. For this, the first container 102C or the server 108 may compare the shipping destination information and the shipping departure information associated with the first container 102C with the shipping destination information and the shipping departure information associated with the one or more second containers 102A/102B/102D. By comparison, the first container 102C or the server 108 may determine that the container 102A and the container 102D are departing from same shipping departure information (i.e. California, US) and shall reach the same shipping destination information (i.e. Texas, US). By comparison, the first container 102C or the server 108 may also determine that the container 102B has different shipping destination information (i.e. Washington, US) and thereby, may not consider the container102B as a healthy container and thus, may discard the container 102B for shifting item 106I, item 106J and item 106K from the first container 102C.

Furthermore, the first container 102C or the server 108 may also check/determine the temperature information (current) associated with the container 102A and the container 102D. For this, the first container 102C or the server 108 may determine that the container 102A and the container 102D maintain 15°C and 14°C (respectively) as current temperature. Also, the first container 102C or the server 108 may determine that the current temperature of the container 102A and the container 102D fall within threshold range of temperature information (i.e. 13°C-17°C) of the first container 102C. Based on such analysis, the first container 102C or the server 108 may consider the container 102A and the container 102D as healthy containers.

Moreover, the first container 102C or the server 108 may further check the payload information, the capacity information, the weight information, and/or the weight limit information associated with the container 102A and the container 102D. By checking, the first container 102C or the server 108 may find that the container 102D is carrying only 1 item 106L but has capacity to accommodate 3 more items, and/or weighs 2.5 kilograms but has 10 kilograms of weight limit. Based on analysis of the information, the first container 102C or the server 108 may find that container 102D can be considered as a healthy container and 3 items (item 106I, item 106J and item 106K) may be shifted from the first container 102C to the healthy container (i.e. container 102D). Additionally, the first container 102C or the server 108 may also find that the container 102A cannot be considered as a healthy container as the container 102A is already carrying 4 items (i.e. maximum allowed capacity) and thus, do not have capacity to accommodate 3 more items. Thereby, the present invention offers technical advantage of automatically analyzing information received from other containers 102A, 102B, 102D to determine one or more healthy containers 102C and providing an automated way to determine one or more healthy containers 102C for shifting the item 106I, item 106J and item 106K. By doing this, the content in the item/s 106 may be prevented from getting damaged and the end consumer as well as the manufacturer are also prevented from suffering loss.

As depicted in Figure 1C, when the first container 102C or the server 108 determines the container 102D to be a healthy container for shifting item 106I, item 106J and item 106K) from the first container 102C to the healthy container 102D, the first container 102C or the server 108 may transmit a message to a user equipment 112 through a network 110. The message may be transmitted to the user equipment 112 for notifying a staff personnel 114 about the defect associated with the first container 102C and/or for shifting the one or more items from the first container 102C to the healthy container 102D. Also, the first container 102C or the server 108 may already have details such as a contact number and/or an electronic mail for transmitting the message to the user equipment 112 for notifying the staff personnel 114. As used herein, the message may be an electronic mail, an automated call, an automated sound alert, a text message, an audio/voice message, a video message, an instant message, a social post, or any such message well known in the art. As used herein, the staff personnel 114 may be a manufacturer of the first container 102C, a dealer of the first container 102C, an owner of the first container 102C, a technician of the first container 102C, a supervisor of the first container 102C, an insurance provider of the first container 102C, a customer of first container 102C or any staff personnel 114 associated directly or indirectly with the first container 102C. Thereby, the present invention offers technical advantage of automatically informing the staff personnel 114 timely for shifting the items 106.

The present invention also encompasses the first container 102C or the server 108 to determine two or more healthy containers in case items placed inside the first container 102C cannot be accommodated in a single/one healthy container. For an instance, if the first container 102C holds 10 items at a time, then the first container 102C or the server 108 may accordingly determine two or more healthy containers for shifting the 10 items. As an another example, if the first container 102C holds 3 items at a time and each of the one or more second containers 102A/102B/102D may have capacity left to accommodate only one more item, the first container 102C or the server 108 may accordingly determine two or more healthy containers for shifting the 3 items. Although the present invention has been explained with respect to a scenario where the first container 102C out of four containers has defect/fault and determines a healthy container for shifting three items; however, it is understood for a person skilled in the art that any container may have defect/fault and then accordingly, determine a healthy container for shifting any number of items.

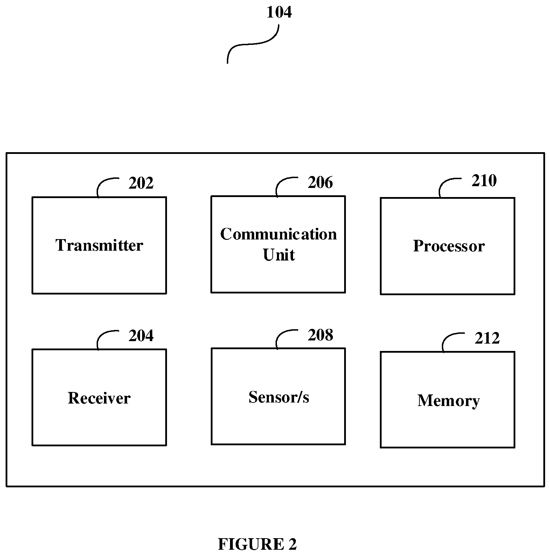

Figure 2 depicts a block diagram of different components of an electronic circuit 104 coupled with a container 102 according to an exemplary embodiment of the invention. The electronic circuit 104 may comprise of, but is not limited to, a transmitter 202, a receiver 204, a communication unit 206, one or more sensors 208, a processor 210 and/or a memory 212. The one or more sensors 208 along with the processor 210 of the electronic circuit 104 coupled with the container 102 may be adapted to determine defect/s associated with the container 102 as explained above in detail in Figure 1A. When the one or more sensors 208 along with the processor 210 determine defect/s, the one or more sensors 208 may inform the communication unit 206 about the defect. The communication unit 206 may be adapted to establish a communication with one or more second containers 102A/102B/102D through a server or through a network. The communication unit 206 may communicate with the transmitter 202 for confirming the communication establishment. Then, the transmitter 202 may be adapted to transmit a request to each of the one or more second containers 102A/102B/102D using the communication for providing an information associated with one or more second containers 102A/102B/102D as discussed above. The receiver 204 may be adapted to receive information associated with one or more second containers 102A/102B/102D from the one or more second containers 102A/102B/102D. The receiver 204 may provide the information to the processor 210. The processor 210 may be adapted to determine one or more healthy containers from the one or more second containers 102A/102B/102D based on the information received from each of the one or more second containers 102A/102B/102D as explained above in Figure 1A & Figure 1B. The processor 210 may also communicate with the transmitter 202 for informing details of the one or more healthy containers. The transmitter 202 may be adapted to transmit a message to a user equipment 112 for shifting one or more items from a first container 102C to the healthy container 102D as explained in Figure 1C above. The memory 212 may be adapted to store an identifier of the first container 102C, an identifier of healthy container 102D, an identifier of each of the one or more second containers 102A/102B/102D, the information associated with first container 102C and/or the information associated with one or more second containers 102A/102B/102D.

Moreover, the transmitter 202, the receiver 204, the communication unit 206, the one or more sensors 208, and/or the memory 212 may be communicably coupled with the processor 210. The different units described herein are exemplary. The invention may be performed using one or more units. For example, the tasks executed by the transmitter 202, the receiver 204, the communication unit 206, the one or more sensors 208, the memory 212, and/or the processor 210 may be performed by a single unit. Alternatively, more number of units as described herein may be used to perform the invention.

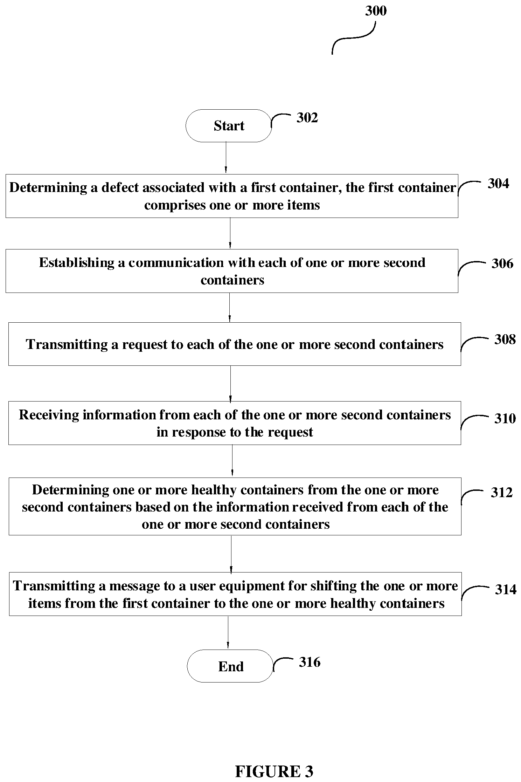

Figure 3 depicts a flowchart outlining the features of the invention in an exemplary embodiment of the invention. The method flowchart 300 describes a method for notifying a person to shift item/s from a defective/faulty container to a new container. The method flowchart 300 starts at step 302.

At step 304, a first container 102C or a server 108 may determine defect/s associated with the first container 102C as explained above. Such defect/s may be determined using one or more sensors associated with the first container 102C. In an exemplary embodiment, the first container 102C may determine defect in a periodic manner. In an exemplary alternative embodiment, the first container 102C may determine defect based on an occurrence of an event.

At step 306, the first container 102C or the server 108 may establish a communication with one or more second containers 102A/102B/102D as explained above in Figure 1A and Figure 1B in details.

At step 308, the first container 102C or the server 108 may transmit a request to each of the one or more second containers 102A/102B/102D using the communication for providing an information associated with one or more second containers 102A/102B/102D as explained above in Figure 1A and Figure 1B in detail.

At step 310, the first container 102C or the server 108 may receive information associated with one or more second containers 102A/102B/102D from the one or more second containers 102A/102B/102D as explained above in Table 1 in detail.

At step 312, the first container 102C or the server 108 may determine one or more healthy containers from the one or more second containers 102A/102B/102D based on the information received from each of the one or more second containers 102A/102B/102D as explained above in Table 1 in detail.

At step 314, the first container 102C or the server 108 may transmit a message to a user equipment 112 for shifting one or more items from the first container 102C to the one or more healthy container 102D as explained above in Figure 1C and in Table 1 in details. The message may be transmitted to the user equipment 112 for notifying a staff personnel 114 about the defect associated with the first container 102C and/or for shifting the one or more items from the first container 102C to the one or more healthy containers 102D. Then, the method flowchart 300 may end at 316.

The present invention is applicable to various fields such as, but not limited to, pharmaceutical industry, cosmetics industry, food industry and any such field that is well known in the art and where an item can be consumed/used by an end consumer.

The embodiments of the invention and the tables discussed herein are exemplary and various modification and alterations to a person skilled in the art are within the scope of the invention.

In one embodiment of the invention, the invention can be operated using the one or more computer readable devices. The one or more computer readable devices can be associated with a server 108 or a container 102. A computer readable medium comprises one or more processors and a memory coupled to the one or more processors, the memory stores instructions executed by the one or more processors, the one or more processors configured to determine a defect associated with a first container 102C, the first container 102C comprises one or more items and establishes a communication with each of one or more second containers 102A/102B/102D. The memory stores instructions executed by the one or more processors, the one or more processors configured to transmit a request to each of the one or more second containers 102A/102B/102D and receive information from each of the one or more second containers 102A/102B/102D in response to the request. The memory stores instructions executed by the one or more processors, the one or more processors also configured to determine one or more healthy containers 102D from the one or more second containers 102A/102B/102D based on the information received from each of the one or more second containers 102A/102B/102D and transmit a message to a user equipment 112 for shifting the one or more items from the first container 102C to the one or more healthy containers 102D.

Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples of the invention are capable of implementation with numerous other general purpose or special purpose computing system environments, configurations, or devices.

Examples of the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the Figures/Tables and described herein. Other examples of the invention may include different computer-executable instructions or components having more or less functionality than illustrated and described herein. Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of aspects of the invention.

As is employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units.

In the subject specification, terms such as "data store," "data storage," "database," "cache," and substantially any other information storage component relevant to operation and functionality of a component, refer to "memory components," or entities embodied in a "memory" or components comprising the memory. It will be appreciated that the memory components, or computer-readable storage media, described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements.

The term "exemplary" is intended to mean "an example of."

Having described aspects of the invention in detail, it will be apparent that modifications and variations are possible without departing from the scope of aspects of the invention as defined in the appended claims. As various changes could be made in the above constructions, products, and methods without departing from the scope of aspects of the invention, it is intended that all matter contained in the above description and shown in the accompanying drawings shall be interpreted as illustrative and not in a limiting sense.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the invention, the scope of which is defined in the appended claims.

## Claims

1. A method comprising:
- determining a defect associated with a first container (102), the first container comprising one or more items (304);
- establishing a communication with each of one or more second containers (306);
- transmitting a request to each of the one or more second containers (308);
- receiving information from each of the one or more second containers in response to the request (310);
- determining one or more healthy containers from the one or more second containers based on the information received from each of the one or more second containers (312); and
- transmitting a message to a user equipment for shifting the one or more items from the first container to the one or more healthy containers (314);
- wherein the first container is a refrigerated container and the one or more second containers are refrigerated containers.

2. The method of claim 1, wherein the defect associated with the first container is determined using one or more sensors associated with the first container.

3. The method of claim 1, wherein the defect associated with the first container comprises a refrigeration defect, an over-weight defect, a sensor defect or a door defect.

4. The method of claim 1, wherein the communication between the first container and the one or more second containers corresponds to a cellular communication or a short-range communication.

5. The method of claim 1, wherein the information received from each of the one or more second containers comprises a payload information, a temperature information, a shipping destination information, a weight information, and/or a capacity information.

6. The method of claim 1, wherein the one or more healthy containers are determined by prioritizing the one or more second containers based on the information from each of the one or more second containers.

7. The method of claim 1, wherein the one or more healthy containers are determined by comparing a shipping destination information of each of the one or more second containers with a shipping destination information of the first container.

8. The method of claim 1, wherein the one or more healthy containers and the first container have same shipping destination information.

9. The method of claim 1, wherein the one or more healthy containers have capacity to accommodate the one or more items from the first container.

10. The method of claim 1, wherein the first container transmits information related to the defect to a server, wherein the server transmits the request to each of the one or more second containers and receives information from each of the one or more second containers in response to the request.

11. The method of claim 10, wherein the one or more healthy containers are determined by the server based on the information received from each of the one or more second containers.

12. The method of claim 10, wherein the message is transmitted from the server to the user equipment for notifying a staff personnel about the defect associated with the first container and/or for shifting the one or more items from the first container to the one or more healthy containers.

13. A first container (102) comprising:
- one or more sensors (208) adapted to determine a defect associated with the first container, the first container comprising one or more items (304);
- a communication unit (206) adapted to establish a communication with each of one or more second containers (306);
- a transmitter (202) adapted to transmit a request to each of the one or more second containers (308);
- a receiver (204) adapted to receive information from each of the one or more second containers in response to the request (310);
- a processor (210) adapted to determine one or more healthy containers from the one or more second containers based on the information received from each of the one or more second containers (312);
and
- the transmitter adapted to transmit a message to a user equipment for shifting the one or more items from the first container to the one or more healthy containers (314);
- wherein the first container is a refrigerated container and the one or more second containers are refrigerated containers.

14. The first container of claim 13, wherein the message is transmitted to the user equipment for notifying a staff personnel about the defect associated with the first container and/or for shifting the one or more items from the first container to the one or more healthy containers.

15. A computer readable medium (104) comprising one or more processors (210) and a memory (212) coupled to the one or more processors, the memory storing instructions executed by the one or more processors, the one or more processors configured to:
determine a defect associated with a first container, the first container comprising one or more items (304);
establish a communication with each of one or more second containers (306);
transmit a request to each of the one or more second containers (308); receive information from each of the one or more second containers in response to the request (310);
determine one or more healthy containers from the one or more second containers based on the information received from each of the one or more second containers (312); and transmit a message to a user equipment for shifting the one or more items from the first container to the one or more healthy containers (314);
wherein the first container is a refrigerated container and the one or more second containers are refrigerated containers.

## Patentansprüche

1. Verfahren, umfassend:
Bestimmen eines Defekts, der mit einem ersten Behälter (102) assoziiert ist, wobei der erste Behälter einen oder mehrere Gegenstände umfasst (304);
Herstellen einer Kommunikation mit jedem von einem oder mehreren zweiten Behältern (306);
Übertragen einer Anforderung an jeden des einen oder der mehreren zweiten Behälter (308);
Empfangen von Informationen von jedem des einen oder der mehreren zweiten Behälter als Reaktion auf die Anforderung (310);
Bestimmen eines oder mehrerer gesunder Behälter aus dem einen oder den mehreren zweiten Behältern basierend auf den Informationen, die von jedem des einen oder der mehreren zweiten Behälter empfangen werden (312); und
Übertragen einer Nachricht an ein Benutzergerät zum Verlagern des einen oder der mehreren Gegenstände von dem ersten Behälter zu dem einen oder den mehreren gesunden Behältern (314);
wobei der erste Behälter ein Kühlbehälter ist und der eine oder die mehreren zweiten Behälter Kühlbehälter sind.

2. Verfahren nach Anspruch 1, wobei der mit dem ersten Behälter assoziierte Defekt unter Verwendung eines oder mehrerer mit dem ersten Behälter assoziierter Sensoren bestimmt wird.

3. Verfahren nach Anspruch 1, wobei der mit dem ersten Behälter assoziierte Defekt einen Kühldefekt, einen Übergewichtsdefekt, einen Sensordefekt oder einen Türdefekt umfasst.

4. Verfahren nach Anspruch 1, wobei die Kommunikation zwischen dem ersten Behälter und dem einen oder den mehreren zweiten Behältern einer Mobilfunkkommunikation oder einer Nahbereichskommunikation entspricht.

5. Verfahren nach Anspruch 1, wobei die Informationen, die von jedem des einen oder der mehreren zweiten Behälter empfangen werden, eine Nutzlastinformation, eine Temperaturinformation, eine Versandzielinformation, eine Gewichtsinformation und/oder eine Kapazitätsinformation umfassen.

6. Verfahren nach Anspruch 1, wobei der eine oder die mehreren gesunden Behälter bestimmt werden, indem der eine oder die mehreren zweiten Behälter basierend auf den Informationen von jedem des einen oder der mehreren zweiten Behälter priorisiert werden.

7. Verfahren nach Anspruch 1, wobei der eine oder die mehreren gesunden Behälter bestimmt werden, indem eine Versandzielinformation von jedem des einen oder der mehreren zweiten Behälter mit einer Versandzielinformation des ersten Behälters verglichen wird.

8. Verfahren nach Anspruch 1, wobei der eine oder die mehreren gesunden Behälter und der erste Behälter die gleichen Versandzielinformationen aufweisen.

9. Verfahren nach Anspruch 1, wobei der eine oder die mehreren gesunden Behälter eine Kapazität zur Aufnahme des einen oder der mehreren Gegenstände aus dem ersten Behälter aufweisen.

10. Verfahren nach Anspruch 1, wobei der erste Behälter Informationen in Bezug auf den Defekt an einen Server überträgt, wobei der Server die Anforderung an jeden des einen oder der mehreren zweiten Behälter überträgt und Informationen von jedem des einen oder der mehreren zweiten Behälter in Reaktion auf die Anforderung empfängt.

11. Verfahren nach Anspruch 10, wobei der eine oder die mehreren gesunden Behälter durch den Server basierend auf den Informationen bestimmt werden, die von jedem des einen oder der mehreren zweiten Behälter empfangen werden.

12. Verfahren nach Anspruch 10, wobei die Nachricht von dem Server an das Benutzergerät übertragen wird, um ein Fachpersonal über den mit dem ersten Behälter assoziierten Defekt zu benachrichtigen und/oder um den einen oder die mehreren Gegenstände von dem ersten Behälter zu dem einen oder den mehreren gesunden Behältern zu verlagern.

13. Erster Behälter (102), umfassend:
einen oder mehrere Sensoren (208), die dazu eingerichtet sind, einen Defekt zu bestimmen, der mit dem ersten Behälter assoziiert ist, wobei der erste Behälter einen oder mehrere Gegenstände umfasst (304);
eine Kommunikationseinheit (206), die dazu eingerichtet ist, eine Kommunikation mit jedem von einem oder mehreren zweiten Behältern herzustellen (306);
einen Sender (202), der dazu eingerichtet ist, eine Anforderung an jeden des einen oder der mehreren zweiten Behälter zu übertragen (308);
einen Empfänger (204), der dazu eingerichtet ist, als Reaktion auf die Anforderung Informationen von jedem der einen oder mehreren zweiten Behälter zu empfangen (310);
einen Prozessor (210), der dazu eingerichtet ist, einen oder mehrere gesunde Behälter aus dem einen oder den mehreren zweiten Behältern basierend auf den Informationen, die von jedem des einen oder der mehreren zweiten Behälter empfangen werden, zu bestimmen (312); und
der Sender dazu eingerichtet ist, eine Nachricht an ein Benutzergerät zum Verlagern des einen oder der mehreren Gegenstände von dem ersten Behälter zu dem einen oder den mehreren gesunden Behältern zu übertragen (314);
wobei der erste Behälter ein Kühlbehälter ist und der eine oder die mehreren zweiten Behälter Kühlbehälter sind.

14. Erster Behälter nach Anspruch 13, wobei die Nachricht an das Benutzergerät übertragen wird, um ein Fachpersonal über den mit dem ersten Behälter assoziierten Defekt zu benachrichtigen und/oder um den einen oder die mehreren Gegenstände von dem ersten Behälter zu dem einen oder den mehreren gesunden Behältern zu verlagern.

15. Computerlesbares Medium (104), umfassend einen oder mehrere Prozessoren (210) und einen Speicher (212), der mit dem einen oder den mehreren Prozessoren gekoppelt ist, wobei der Speicher Anweisungen speichert, die durch den einen oder die mehreren Prozessoren ausgeführt werden, wobei der eine oder die mehreren Prozessoren zu Folgendem ausgelegt sind:
Bestimmen eines Defekts, der mit einem ersten Behälter assoziiert ist, wobei der erste Behälter einen oder mehrere Gegenstände umfasst (304);
Herstellen einer Kommunikation mit jedem von einem oder mehreren zweiten Behältern (306);
Übertragen einer Anforderung an jeden des einen oder der mehreren zweiten Behälter (308); Empfangen von Informationen von jedem des ein oder der mehreren zweiten Behälter als Reaktion auf die Anforderung (310);
Bestimmen eines oder mehrerer gesunder Behälter aus dem einen oder den mehreren zweiten Behältern basierend auf den Informationen, die von jedem des einen oder der mehreren zweiten Behälter empfangen werden (312); und Übertragen einer Nachricht an ein Benutzergerät zum Verlagern des einen oder der mehreren Gegenstände von dem ersten Behälter zu dem einen oder den mehreren gesunden Behältern (314);
wobei der erste Behälter ein Kühlbehälter ist und der eine oder die mehreren zweiten Behälter Kühlbehälter sind.

## Revendications

1. Procédé comprenant :
- la détermination d'un défaut associé à un premier conteneur (102), le premier conteneur comprenant un ou plusieurs articles (304) ;
- l'établissement d'une communication avec chacun d'un ou de plusieurs seconds conteneurs (306) ;
- l'émission d'une demande à chacun des un ou plusieurs seconds conteneurs (308) ;
- la réception d'informations en provenance de chacun des un ou plusieurs seconds conteneurs en réponse à la demande (310) ;
- la détermination d'un ou de plusieurs conteneurs sains à partir des un ou plusieurs seconds conteneurs sur la base des informations reçues en provenance de chacun des un ou des plusieurs seconds conteneurs (312) ; et
- l'émission d'un message à un équipement utilisateur pour déplacer les un ou plusieurs éléments du premier conteneur vers les un ou plusieurs conteneurs sains (314) ;
- dans lequel le premier conteneur est un conteneur réfrigéré et les un ou plusieurs seconds conteneurs sont des conteneurs réfrigérés.

2. Procédé selon la revendication 1, dans lequel le défaut associé au premier conteneur est déterminé à l'aide d'un ou de plusieurs capteurs associés au premier conteneur.

3. Procédé selon la revendication 1, dans lequel le défaut associé au premier conteneur comprend un défaut de réfrigération, un défaut de surpoids, un défaut de capteur ou un défaut de porte.

4. Procédé selon la revendication 1, dans lequel la communication entre le premier conteneur et les un ou plusieurs seconds conteneurs correspond à une communication cellulaire ou à une communication à courte portée.

5. Procédé selon la revendication 1, dans lequel les informations reçues en provenance de chacun des un ou plusieurs seconds conteneurs comprennent des informations de charge utile, des informations de température, des informations de destination d'expédition, des informations de poids et/ou des informations de capacité.

6. Procédé selon la revendication 1, dans lequel les un ou plusieurs conteneurs sains sont déterminés en donnant la priorité aux un ou plusieurs seconds conteneurs sur la base des informations provenant de chacun des un ou plusieurs seconds conteneurs.

7. Procédé selon la revendication 1, dans lequel les un ou plusieurs conteneurs sains sont déterminés par la comparaison d'informations de destination d'expédition de chacun des un ou plusieurs seconds conteneurs avec des informations de destination d'expédition du premier conteneur.

8. Procédé selon la revendication 1, dans lequel les un ou plusieurs conteneurs sains et le premier conteneur ont les mêmes informations de destination d'expédition.

9. Procédé selon la revendication 1, dans lequel les un ou plusieurs conteneurs sains ont la capacité d'accueillir les un ou plusieurs articles en provenance du premier conteneur.

10. Procédé selon la revendication 1, dans lequel le premier conteneur émet des informations relatives au défaut à un serveur, dans lequel le serveur émet la demande à chacun des un ou plusieurs seconds conteneurs et reçoit des informations en provenance de chacun des un ou plusieurs seconds conteneurs en réponse à la demande.

11. Procédé selon la revendication 10, dans lequel les un ou plusieurs conteneurs sains sont déterminés par le serveur sur la base des informations reçues en provenance de chacun des un ou plusieurs seconds conteneurs.

12. Procédé selon la revendication 10, dans lequel le message est émis du serveur à l'équipement utilisateur pour notifier au personnel le défaut associé au premier conteneur et/ou pour déplacer les un ou plusieurs articles du premier conteneur vers les un ou plusieurs conteneurs sains.

13. Premier conteneur (102) comprenant :
- un ou plusieurs capteurs (208) adaptés pour déterminer un défaut associé au premier conteneur, le premier conteneur comprenant un ou plusieurs articles (304) ;
- une unité de communication (206) adaptée pour établir une communication avec chacun d'un ou de plusieurs seconds conteneurs (306) ;
- un émetteur (202) adapté pour émettre une demande à chacun des un ou plusieurs seconds conteneurs (308) ;
- un récepteur (204) adapté pour recevoir des informations en provenance de chacun des un ou plusieurs seconds conteneurs en réponse à la demande (310) ;
- un processeur (210) adapté pour déterminer un ou plusieurs conteneurs sains à partir des un ou plusieurs seconds conteneurs sur la base des informations reçues en provenance de chacun des un ou des plusieurs seconds conteneurs (312) ; et
- l'émetteur adapté pour émettre un message à un équipement utilisateur pour déplacer les un ou plusieurs éléments du premier conteneur vers les un ou plusieurs conteneurs sains (314) ;
- dans lequel le premier conteneur est un conteneur réfrigéré et les un ou plusieurs seconds conteneurs sont des conteneurs réfrigérés.

14. Premier conteneur selon la revendication 13, dans lequel le message est émis à l'équipement utilisateur pour notifier au personnel le défaut associé au premier conteneur et/ou pour déplacer les un ou plusieurs articles du premier conteneur vers les un ou plusieurs conteneurs sains.

15. Support lisible par ordinateur (104) comprenant un ou plusieurs processeurs (210) et une mémoire (212) couplée aux un ou plusieurs processeurs, la mémoire stockant des instructions exécutées par les un ou plusieurs processeurs, les un ou plusieurs processeurs étant configurés pour :
déterminer un défaut associé à un premier conteneur, le premier conteneur comprenant un ou plusieurs articles (304) ;
établir une communication avec chacun d'un ou de plusieurs seconds conteneurs (306) ;
émettre une demande à chacun des un ou plusieurs seconds conteneurs (308) ; recevoir des informations en provenance de chacun des un ou plusieurs seconds conteneurs en réponse à la demande (310) ;
déterminer un ou plusieurs conteneurs sains parmi les un ou plusieurs seconds conteneurs sur la base des informations reçues de la part de chacun des un ou plusieurs seconds conteneurs (312) ; et émettre un message à un équipement utilisateur pour déplacer les un ou plusieurs articles du premier conteneur vers les un ou plusieurs conteneurs sains (314) ;
dans lequel le premier conteneur est un conteneur réfrigéré et les un ou plusieurs seconds conteneurs sont des conteneurs réfrigérés.
